# EUROPÄISCHE PATENTSCHRIFT

(11) **EP 2 542 446 B1**
(45) Veröffentlichungstag und Bekanntmachung des Hinweises auf die Patenterteilung: **20.11.2013**
(21) Anmeldenummer: 11704535.1
(22) Anmeldetag: 01.02.2011
(51) Int. Cl.: B60N 2/28, B60N 2/68

(54) **FAHRZEUGSITZ, INSBESONDERE KRAFTFAHRZEUGSITZ**
VEHICLE SEAT
SIEGE DE VEHICULE

(30) Priorität: 01.03.2010 DE 102010010188
(43) Veröffentlichungstag der Anmeldung: 09.01.2013
(73) Patentinhaber: Keiper GmbH & Co. KG, 67657 Kaiserslautern (DE)
(72) Erfinder: KRAMM, Lars, 67705 Trippstadt (DE)
(74) Vertreter: Liedhegener, Ralf
(86) Internationale Anmeldenummer: PCT/EP2011/000457
(87) Internationale Veröffentlichungsnummer: WO 2011/107193

(56) Entgegenhaltungen:
- EP-A2- 1 380 464
- EP-A2- 1 759 967
- EP-B1- 0 625 445
- DE-A1- 1 554 155
- DE-U1- 20 305 074
- DE-U1-202007 018 785
- US-A- 5 570 508

## Beschreibung

Die Erfindung betrifft einen Fahrzeugsitz, insbesondere einen Kraftfahrzeugsitz, mit den Merkmalen des Oberbegriffs des Anspruches 1.

Zur Befestigung von Kindersitzen auf Fahrzeugsitzen ist ein "Isofix" genanntes System bekannt, bei dem der untere Bereich des Kindersitzes mittels Konnektoren mit Halteelementen der Sitzstruktur lösbar verbunden werden kann. Dabei sind oft die Halteelemente als Bügel und die Konnektoren kindersitzfest und als Haken oder Schlösser ausgebildet, aber die umgekehrte Zuordnung ist auch denkbar. Mittels eines "toptether" kann der obere Bereich des Kindersitzes zusätzlich mit dem Fahrzeugsitz verbunden werden, indem am oberen Bereich des Kindersitzes ein Haltegurt befestigt ist, welcher über die Lehne des Fahrzeugsitzes gezogen und auf deren Rückseite an einem zweiten Halteelement befestigt ist. Ein Fahrzeugsitz dieser Art ist aus der DE 20 2007 018 785 U1 bekannt, wo die Halteelemente direkt miteinander verbundene Abschnitte einer gemeinsamen, einstückig ausgebildeten Haltevorrichtung sind.

Der Erfindung liegt die Aufgabe zu Grunde, einen alternativen Fahrzeugsitz der eingangs genannten Art zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Das zweite Halteelement erfüllt zwei Funktionen, nämlich einerseits die Verbindung des Haltegurts mit dem Fahrzeugsitz, vorliegend mit der Lehne, und andererseits die Abstützung des Polsters an der Struktur der Lehne. Für beide Funktionen sind separate Lösungen mit Drähten bekannt, beispielsweise für die Verbindung mit dem Haltegurt aus der genannten DE 20 2007 018 785 U1 und für die Abstützung des Polsters aus der EP 0 625 445 B1 oder der DE 10 2006 058 232 A1. Die erfindungsgemäße Lösung mit der Doppelfunktion reduziert nicht nur die Anzahl der Bauteile und damit die Kosten (Material, Befestigung), sondern sie hat auch den Vorteil, dass das zweite Halteelement nicht so tief in der Nähe der Quertraverse des Sitzteiles sitzt, sondern gut erreichbar, beispielsweise in der Mitte der Lehne. Wäre das zweite Halteelement separat aus einem langen Draht gefertigt, wäre es sehr labil in und gegen die Fahrtrichtung. Aufgrund der Integration in die zur Abstützung des Polsters benötigten Bauteile wird das zweite Halteelement stabilisiert. Die kostengünstige Ausbildung als Draht ist möglich, weil der Kraftfluss über den Haltegurt das zweite Halteelement nur auf Zug beansprucht, also dieses hierbei keine Biegung aufnimmt, so dass sich eine hohe Festigkeit ergibt.

Der erfindungsgemäße Fahrzeugsitz kann theoretisch in allen Sitzreihen eines Kraftfahrzeuges oder eines anderen Fahrzeuges eingesetzt werden, wird aber in der Praxis nur in einer hinteren Sitzreihe vorgesehen sein. Soweit der Fahrzeugsitz eine Sitzanlage mit mehreren Sitzplätzen ist, können mehrere Sitzplätze erfindungsgemäß ausgebildet sein. Die Begriffe "Konnektor" und "Haltegurt" sollen in weitem Sinne verstanden werden.

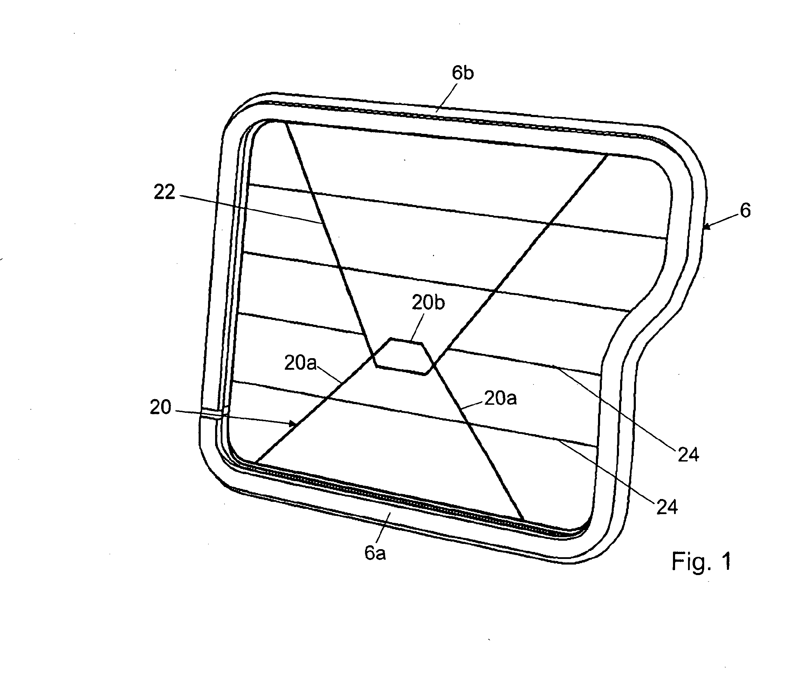

Im folgenden ist die Erfindung anhand eines in der Zeichnung dargestellten Ausführungsbeispiels näher erläutert. Es zeigen
- Fig. 1: eine perspektivische Ansicht der Lehne ohne Polster und Bezug, und

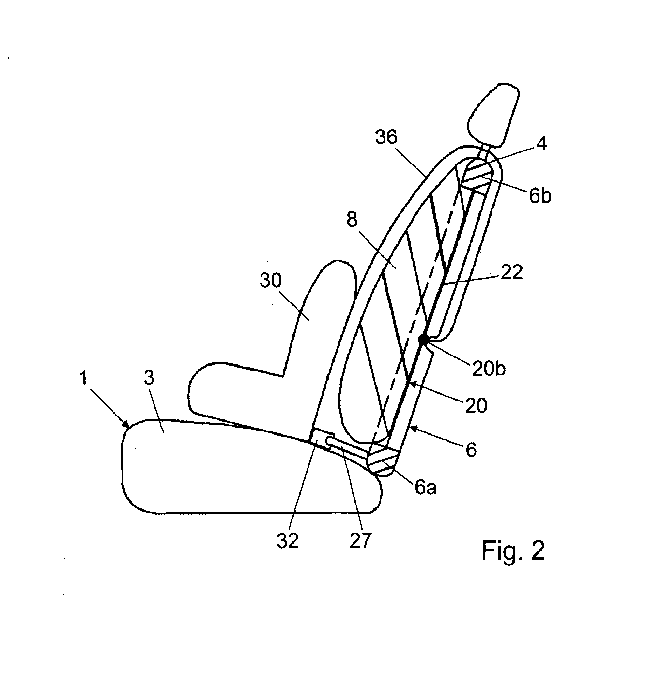

- Fig. 2: eine schematische, teilweise geschnittene Seitenansicht eines Fahrzeugsitzes mit aufgesetztem und befestigtem Kindersitz.

Ein Fahrzeugsitz 1 ist im vorliegenden Ausführungsbeispiel in einer hinteren Sitzreihe eines Kraftfahrzeuges vorgesehen. Die Anordnung des Fahrzeugsitzes 1 innerhalb des Kraftfahrzeuges und dessen gewöhnliche Fahrtrichtung definieren nachfolgend verwendete Richtungsangaben. Der Fahrzeugsitz 1 weist ein Sitzteil 3 und wenigstens eine Lehne 4 auf.

Die Lehne 4 weist als tragende Struktur einen Lehnenrahmen 6 auf, welcher auf der nach vorne gewandten Seite ein Polster 8 trägt, das mit einem am Lehnenrahmen 6 befestigten Bezug bespannt ist. Auf der nach hinten gewandten Seite trägt der Lehnenrahmen 6 eine Blende. Alternativ zur Blende kann ein Teppich oder ein anderer Bezug vorgesehen sein.

Der Lehnenrahmen 6 umschließt einen im wesentlichen ebenen Bauraum. Innerhalb dieses Bauraums sind mehrere Drähte angeordnet, welche an ihren Enden am Lehnenrahmen 6 befestigt sind. Die Drähte dienen der Abstützung des Polsters 8. Ein erster Draht 20 von insbesondere konstantem Durchmesser ist mit einem Ende am unteren Schenkel 6a des Lehnenrahmens 6 in der Nähe einer der beiden unteren Ecken befestigt, verläuft in einem schrägen Abschnitt 20a bis etwa zur Mitte des Lehnenrahmens 6, dort (vorliegend zugleich in der Mitte des ersten Drahtes 20) in einem horizontalen Abschnitt 20b parallel zum unteren Schenkel 6a und dann mit einem weiteren schrägen Abschnitt 20a bis zum unteren Schenkel 6a, an dem es in der Nähe der anderen unteren Ecke befestigt ist. Insgesamt ergibt sich so eine Trapezform. Vorzugsweise sind die beiden schrägen Abschnitte 20a von gleicher Länge und verlaufen in einem betragsmäßig gleichen Winkel zum unteren Schenkel 6a.

Ein zweiter Draht 22 von insbesondere konstantem Durchmesser ist in einer dem ersten Draht 20 entsprechenden Weise am oberen Schenkel 6b des Lehnenrahmens 6 befestigt und zur Mitte weisend. Der zum oberen Schenkel 6b (und zum unteren Schenkel 6a) parallele Abschnitt des zweiten Drahtes 22 ist unterhalb des horizontalen Abschnitts 20b des ersten Drahtes 20 angeordnet, so dass die beiden Drähte 20 und 22 in den schrägen Abschnitten einander kreuzen und an den Kreuzungspunkten vorzugsweise miteinander verbunden sind, so dass die beiden verbundenen Drähte 20 und 22 zusammen straff im Lehnenrahmen 6 gespannt sind. Das Polster 8 ist dann in seiner Mitte an den Drähten 20 und 22 abgestützt. Zur Verbesserung der Abstützung können noch Querdrähte 24 von insbesondere konstantem Durchmesser vorgesehen sein, die beispielsweise zwischen den beiden seitlichen Schenkeln des Lehnenrahmens 6 gespannt sind und mit den beiden Drähten 20 und 22 zusätzlich verbunden sein können.

An der tragenden Struktur des Fahrzeugsitzes 1, vorzugsweise an der tragenden Struktur des Sitzteils 3, beispielsweise an einer Quertraverse desselben, sind zwei erste Halteelemente 27 für einen auf den Fahrzeugsitz 1 zu setzenden und daran zu befestigenden Kindersitz 30 vorgesehen, welche bügelförmig ausgebildet und als sogenannte "Isofix-Bügel" bekannt sind. Der an sich bekannte Kindersitz 30 weist hierzu zwei Konnektoren 32 auf, die im unteren Bereich des Kindersitzes 30 nach hinten abstehen. Die Konnektoren 32 können mit den ersten Halteelementen 27 zusammenwirken, beispielsweise in letztere einhaken. Der erste Draht 20, genauer gesagt sein horizontaler Abschnitt 20b, definiert ein zweites Halteelement, welches mit einem - als "töptether" bekannten - Haltegurt 36 des Kindersitzes 30 zusammenwirkt. Hierzu ist der horizontale Abschnitt 20b des ersten Drahtes 20 vorzugsweise durch eine Mulde der Blende auf der nach hinten gewandten Seite des Lehnenrahmen 6 geführt, so dass er von außen zugänglich ist. Besagter Haltegurt 36 ist im oberen Bereich des Kindersitzes 30 befestigt, nach oben gerührt, über die Oberkante der Lehne 4 des Fahrzeugsitzes 1 gezogen und nach unten geführt, wo er dann am horizontalen Abschnitt 20b des ersten Drahtes 20 befestigt ist, beispielsweise eingehakt ist.

Die Lehnenlängsrichtung verläuft zwischen dem unteren Schenkel 6a und dem dazu parallelen oberen Schenkel 6b. Der horizontale Abschnitt 20b ist im Ausführungsbeispiel ungefähr in der Mitte der Lehne 4 angeordnet. Darunter soll in Lehnenlängsrichtung ein Bereich von 50% ± 20%, insbesondere 50% ± 10%, der Abmessung der Lehne 4 in Lehnenlängsrichtung verstanden werden. Diese Anordnung hat gegenüber einer tiefen Anordnung den Vorteil der besseren Zugänglichkeit und gegenüber einer höheren Anordnung den Vorteil, dass keine Behinderung durch Hutablagen oder Laderaumabdeckungen auftreten können. Die schrägen Abschnitte 20a verlaufen schräg zur Lehnenlängsrichtung und schräg zum unteren Schenkel 6a. Darunter soll ein Winkel von 45° ± 25°, insbesondere 45° ± 15°, zum unteren Schenkel 6a verstanden werden. Der schräge Verlauf optimiert die Krafteinleitung in den unteren Schenkel.

### Bezugszeichenliste

- 1: Fahrzeugsitz
- 3: Sitzteil
- 4: Lehne
- 6: Lehnenrahmen
- 6a: unterer Schenkel
- 6b: oberer Schenkel
- 8: Polster
- 20: erster Draht
- 20a: schräger Abschnitt
- 20b: horizontaler Abschnitt
- 22: zweiter Draht
- 24: Querdraht
- 27: (erstes) Halteelement
- 30: Kindersitz
- 32: Konnektor
- 36: Haltegurt

## Patentansprüche

1. Fahrzeugsitz, insbesondere Kraftfahrzeugsitz, mit einem Sitzteil (3), einer Lehne (4), wobei die Lehne (4) einen Lehnenrahmen (6) und ein vom Lehnenrahmen (6) getragenes Polster (8) aufweist, und Halteelementen (20, 20b, 27) zur Befestigung eines Kindersitzes (30), welcher auf das Sitzteil (3) des Fahrzeugsitzes (1) gesetzt ist, wobei der Kindersitz (30) in seinem unteren Bereich mittels wenigstens eines Konnektors (12) mit wenigstens einem ersten Halteelement (27) und in seinem oberen Bereich mittels wenigstens eines Haltegurtes (36) mit wenigstens einem zweiten Halteelement (20, 20b) verbindbar ist, **dadurch gekennzeichnet, dass** das zweite Halteelement (20, 20b) zugleich das Polster (8) abstützt und dass als zweites Halteelement (20, 20b) ein erster Draht (20) vorgesehen ist, welcher unter Bildung einer Trapezform an einem Schenkel (6a) des Lehnenrahmens (6) befestigt ist..

2. Fahrzeugsitz nach Anspruch 1, **dadurch gekennzeichnet, dass** der erste Draht (20) zwei schräge Abschnitte (20a) zur Befestigung an dem Schenkel (6a) des Lehnenrahmens (6) und dazwischen einen horizontalen Abschnitt (20b) zur Verbindung mit dem Haltegurt (36) aufweist.

3. Fahrzeugsitz nach einem der vorhergehenden Ansprüche, **dadurch gekennzeichnet, dass** ein Abschnitt (20a, 20b) des zweiten Halteelementes (20), insbesondere der horizontale Abschnitt (20b), ungefähr in der Mitte des Lehnenrahmens (6), insbesondere innerhalb eines vom Lehnenrahmen (6) umschlossenen Bauraumes, angeordnet ist.

4. Fahrzeugsitz nach Anspruch 2 oder 3, **dadurch gekennzeichnet, dass** der horizontale Abschnitt (20b) von der nach hinten gewandten Seite der Lehne (4) aus zugänglich ist.

5. Fahrzeugsitz nach einem der Ansprüche 1 bis 3, **dadurch gekennzeichnet, dass** der erste Draht (20) am unteren Schenkel (6a) des Lehnenrahmens (6) befestigt ist, und dass ein zweiter Draht (22) unter Bildung einer Trapezform an einem oberen Schenkel (6b) des Lehnenrahmens (6) befestigt ist, wobei der zweite Draht (22) ebenfalls der Abstützung des Polsters (8) dient.

6. Fahrzeugsitz nach Anspruch 5, **dadurch gekennzeichnet, dass** der erste Draht (20) und der zweite Draht (22) einander kreuzen und an den Kreuzungspunkten miteinander verbunden sind.

7. Fahrzeugsitz nach einem der vorhergehenden Ansprüche, **dadurch gekennzeichnet, dass** zwischen wenigstens zwei Schenkeln des Lehnenrahmens (6) Querdrähte (24) zur Abstützung des Polsters (8) gespannt sind.

8. Fahrzeugsitz nach einem der vorhergehenden Ansprüche, **dadurch gekennzeichnet, dass** die vorgesehenen Drähte (20, 22, 24) einen konstanten Durchmesser aufweisen.

9. Fahrzeugsitz nach einem der vorhergehenden Ansprüche, **dadurch gekennzeichnet, dass** der Haltegurt (36) am Kindersitz (30) befestigt, über die Lehne (4) gezogen und am zweiten Halteelement (20, 20b) befestigt ist.

## Claims

1. Vehicle seat, in particular a motor vehicle seat, having a seat part (3), a backrest (4), wherein the backrest (4) has a backrest frame (6) and a cushion (8) which is carried by the backrest frame (6), and retaining elements (20, 20b, 27) for fastening a child seat (30) which is placed on the seat part (3) of the vehicle seat (1), wherein the child seat (30) may be connected to at least one first retaining element (27) by means of at least one connector (12) in its lower region and may be connected to at least one second retaining element (20, 20b) by means of at least one retaining belt (36) in its upper region, **characterized in that** the second retaining element (20, 20b) simultaneously supports the cushion (8) and **in that** as the second retaining element (20, 20b) a first wire (20) is provided, said first wire being fastened to a limb (6a) of the backrest frame (6) forming a trapezoidal shape.

2. Vehicle seat according to Claim 1, **characterized in that** the first wire (20) comprises two oblique portions (20a) for fastening to the limb (6a) of the backrest frame (6) and a horizontal portion (20b) therebetween for connecting to the retaining belt (36).

3. Vehicle seat according to one of the preceding claims, **characterized in that** a portion (20a, 20b) of the second retaining element (20), in particular the horizontal portion (20b), is arranged approximately in the middle of the backrest frame (6), in particular inside an installation space enclosed by the backrest frame (6).

4. Vehicle seat according to Claim 2 or 3, **characterized in that** the horizontal portion (20b) is accessible from the side of the backrest (4) facing to the rear.

5. Vehicle seat according to one of Claims 1 to 3, **characterized in that** the first wire (20) is fastened to the lower limb (6a) of the backrest frame (6), and **in that** a second wire (22) is fastened to an upper limb (6b) of the backrest frame (6) forming a trapezoidal shape, wherein the second wire (22) also serves for supporting the cushion (8).

6. Vehicle seat according to Claim 5, **characterized in that** the first wire (20) and the second wire (22) cross over one another and are connected together at the points of intersection.

7. Vehicle seat according to one of the preceding claims, **characterized in that** transverse wires (24) are stretched between at least two limbs of the backrest frame (6) for supporting the cushion (8).

8. Vehicle seat according to one of the preceding claims, **characterized in that** the wires (20, 22, 24) provided have a uniform diameter.

9. Vehicle seat according to one of the preceding claims, **characterized in that** the retaining belt (36) is fastened to the child seat (30), pulled over the backrest (4) and fastened to the second retaining element (20, 20b).

## Revendications

1. Siège de véhicule, en particulier siège de véhicule automobile, comprenant une partie d'assise (3), un dossier (4), le dossier (4) présentant un cadre de dossier (6) et un rembourrage (8) supporté par le cadre de dossier (6), et des éléments de retenue (20, 20b, 27) pour la fixation d'un siège pour enfant (30), qui est posé sur la partie d'assise (3) du siège de véhicule (1), le siège pour enfant (30) pouvant être connecté dans sa région inférieure au moyen d'au moins un connecteur (12) à au moins un premier élément de retenue (27) et dans sa région supérieure au moyen d'au moins une sangle de retenue (36) à au moins un deuxième élément de retenue (20, 20b), **caractérisé en ce que** le deuxième élément de retenue (20, 20b) supporte en même temps le rembourrage (8) et **en ce qu'**un premier fil métallique (20) est prévu en tant que deuxième élément de retenue (20, 20b), lequel fil métallique est fixé à une branche (6a) du cadre de dossier (6) en formant une forme trapézoïdale.

2. Siège de véhicule selon la revendication 1, **caractérisé en ce que** le premier fil métallique (20) présente deux portions obliques (20a) pour la fixation à la branche (6a) du cadre de dossier (6) et entre elles une portion horizontale (20b) pour la connexion à la sangle de retenue (36).

3. Siège de véhicule selon l'une quelconque des revendications précédentes, **caractérisé en ce qu'**une portion (20a, 20b) du deuxième élément de retenue (20), en particulier la portion horizontale (20b), est disposée approximativement au milieu du cadre de dossier (6), en particulier à l'intérieur d'un espace structurel entouré par le cadre de dossier (6).

4. Siège de véhicule selon la revendication 2 ou 3, **caractérisé en ce que** la portion horizontale (20b) est accessible depuis le côté du dossier (4) tourné vers l'arrière.

5. Siège de véhicule selon l'une quelconque des revendications 1 à 3, **caractérisé en ce que** le premier fil métallique (20) est fixé à la branche inférieure (6a) du cadre de dossier (6), et **en ce qu'**un deuxième fil métallique (22) est fixé à une branche supérieure (6b) du cadre de dossier (6) en formant une forme trapézoïdale, le deuxième fil métallique (22) servant également à supporter le rembourrage (8).

6. Siège de véhicule selon la revendication 5, **caractérisé en ce que** le premier fil métallique (20) et le deuxième fil métallique (22) se croisent mutuellement et sont connectés l'un à l'autre au niveau de points de croisement.

7. Siège de véhicule selon l'une quelconque des revendications précédentes, **caractérisé en ce qu'**entre au moins deux branches du cadre de dossier (6) sont tendus des fils métalliques transversaux (24) pour supporter le rembourrage (8).

8. Siège de véhicule selon l'une quelconque des revendications précédentes, **caractérisé en ce que** les fils métalliques prévus (20, 22, 24) présentent un diamètre constant.

9. Siège de véhicule selon l'une quelconque des revendications précédentes, **caractérisé en ce que** la sangle de retenue (36) est fixée sur le siège pour enfant (30), est tirée par-dessus le dossier (4) et est fixée sur le deuxième élément de retenue (20, 20b).
